# EUROPEAN PATENT APPLICATION

(11) **EP 4 787 008 A1**
(43) Date of publication of application: **05.08.2026**
(21) Application number: 23954314.3
(22) Date of filing: 28.09.2023
(51) Int. Cl.: G01S 5/02

(54) **TERMINAL AND COMMUNICATION METHOD**

(71) Applicant: NTT DOCOMO, INC., Tokyo 100-6150 (JP)
(72) Inventor: OKAMURA, Masaya, Tokyo 100-6150 (JP); TAKEDA, Daiki, Tokyo 100-6150 (JP); SHIMA, Kousuke, Tokyo 100-6150 (JP); HARADA, Hiroki, Tokyo 100-6150 (JP); ECHIGO, Haruhi, Tokyo 100-6150 (JP)
(74) Representative: Hoffmann Eitle
(86) International application number: PCT/JP2023/035509
(87) International publication number: WO 2025/069344

(57) **Abstract**

A terminal (20) of the present invention includes: a reception unit (220) configured to receive configuration information related to metric measurement for positioning from a network; and a control unit (240) configured to configure measurement of a first metric used for carrier phase positioning and measurement of a second metric used for a positioning method that is different from the carrier phase positioning, for the terminal (20) based on the configuration information.

According to the present invention, a method of performing CPP measurement and metric measurement for a positioning method other than CPP for CPP ambiguity resolution can be clarified and accuracy of the CPP ambiguity resolution can be improved.

## Description

### TECHNICAL FIELD

The present invention relates to a terminal and a communication method related to positioning technologies in a wireless communication system.

### BACKGROUND ART

In 3GPP (registered trademark) (3rd Generation Partnership Project), in order to realize further larger system capacity, further faster data transmission speed, further lower latency in a wireless communication section, etc., a wireless communication method called "5G" or "NR (New Radio)" is being discussed (hereinafter, the wireless communication method is referred to as "NR"). In 5G, various wireless technologies and network architectures are being discussed to satisfy the requirements of a radio link delay of 1 ms or less while achieving throughput of 10 Gbps or more.

It is to be noted that "NR Positioning" for performing positioning by using a reference signal or the like is being discussed. In addition, the carrier phase positioning (CPP) that is a high accuracy measurement method using the carrier phase that is adopted for the global navigation satellite system (GNSS) is being discussed as a functional enhancement of the NR Positioning for general purposes.

In 3GPP RAN WG1, as one of the methods for CPP ambiguity resolution, there is agreement to use a method of reusing the measurement results in the conventional positioning method such as the reference signal timing difference (RSTD) and the UE Rx-Tx time difference.

### CITATION LIST

### Non-Patent Literature

Non-Patent Literature 1: 3GPP TS 37.355 V17.5.0 (2023-06)
Non-Patent Literature 2: 3GPP TS 38.455 V17.5.0 (2023-06)

### SUMMARY OF INVENTION

### TECHNICAL PROBLEM

However, there is a concern that the accuracy of the CPP ambiguity resolution will be degraded because how CPP measurement and the metric measurement in a positioning method other than CPP are to be performed for CPP ambiguity resolution has not been clarified.

### SOLUTION TO PROBLEM

A terminal according to an embodiment of the present invention includes: a reception unit configured to receive configuration information related to metric measurement for positioning from a network; and a control unit configured to configure first metric measurement used for carrier phase positioning and second metric measurement used for a positioning method that is different from the carrier phase positioning, for the terminal based on the configuration information.

### ADVANTAGEOUS EFFECTS OF INVENTION

According to an embodiment of the present invention, the accuracy of the CPP ambiguity resolution will be improved by clarifying how CPP measurement and the metric measurement in a positioning method other than CPP are to be performed in the CPP ambiguity resolution.

### BRIEF DESCRIPTION OF DRAWINGS

[Fig. 1] is a drawing for describing a wireless communication system in an embodiment of the present invention.
[Fig. 2] is a drawing for describing a wireless communication system in an embodiment of the present invention.
[Fig. 3] is a drawing illustrating a configuration in which there are a plurality of base stations.
[Fig. 4] is a drawing for describing CPP.
[Fig. 5] is a drawing for describing CPP.
[Fig. 6] is a sequence diagram illustrating an example of an operation procedure in the first embodiment.
[Fig. 7] is a sequence diagram illustrating an example of an operation procedure in the second embodiment.
[Fig. 8] is a sequence diagram illustrating an example of an operation procedure in the third embodiment.
[Fig. 9] is a sequence diagram illustrating an example of an operation procedure in the fourth embodiment.
[Fig. 10] is a drawing illustrating an example of a functional structure of a base station 10 and an LMF 30 in an embodiment of the present invention.
[Fig. 11] is a drawing illustrating an example of a functional structure of a terminal 20 in an embodiment of the present invention.
[Fig. 12] is a drawing illustrating an example of a hardware structure of the base station 10, the terminal 20, or the LMF 30 in an embodiment of the present invention.
[Fig. 13] is a drawing illustrating an example of a vehicle.

### DESCRIPTION OF EMBODIMENTS

Hereinafter, one or more embodiments of the present invention will be described by referring to the drawings. It should be noted that the embodiments described below are examples. Embodiments of the present invention are not limited to the following embodiments.

### (System configuration)

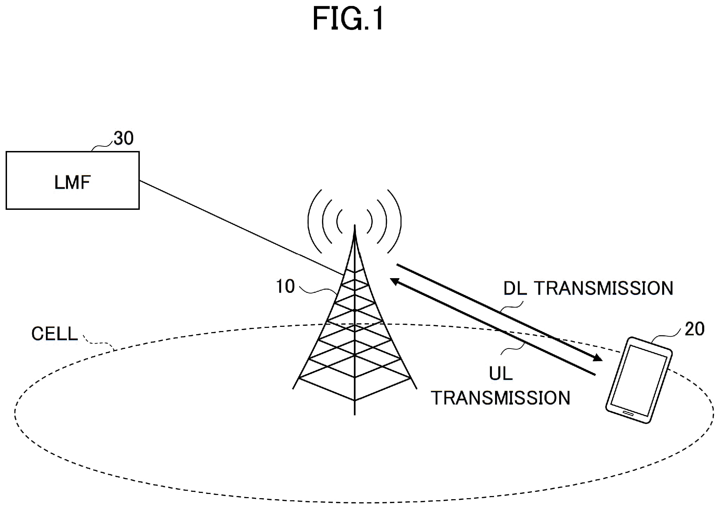

Fig. 1 is a drawing for describing a wireless communication system in an embodiment of the present invention. As illustrated in Fig. 1, a wireless communication system in an embodiment of the present invention includes a base station 10 and a terminal 20. In addition, in the core network, there is an LMF 30 that can communicate with the base station 10. It is to be noted that the LMF 30 may communicate with the base station 10 via an AMF. The LMF 30 is an example of a network device. The base station 10 is also an example of a network device. In addition, the LMF 30 may be referred to as a management device.

In Fig. 1, a single base station 10 and a single terminal 20 are illustrated as an example, but there may be a plurality of base stations 10 and a plurality of terminals 20. For example, there may be a plurality of base stations 10 that serve as the transmission sources of a downlink positioning reference signal (DL-PRS) received by the terminal. One of, multiple of, or all of the plurality of base stations 10 may be a device in the air (e.g.: satellite, HAPS).

The transmission source of DL-PRS may be referred to as a TRP (transmission reception point). The TRP may be referred to as a transmission point, or may be referred to as a reception point. The TRP may be referred to as a base station.

The base station 10 is a communication device that provides one or more cells and performs wireless communication with the terminal 20. Physical resources of the radio signal may be defined in the time domain and the frequency domain, the time domain may be defined by the number of OFDM symbols, and the frequency domain may be defined by the number of sub-carriers or resource blocks. Further, a TTI (Transmission Time Interval) in the time domain may be a slot, or the TTI may be a subframe. It is to be noted that a cell may be synonymous with a CC.

The base station 10 can perform carrier aggregation to communicate with the terminal 20 by bundling a plurality of cells (multiple CCs (component carriers)). One PCell (primary cell) and one or more SCells (secondary cells) are used in the carrier aggregation.

The base station 10 transmits a synchronization signal, system information, and the like, to the terminal 20. The synchronization signal is, for example, an NR-PSS and/or an NR-SSS. The system information may be transmitted via a NR-PBCH or a PDSCH, for example, and may be referred to as broadcast information. As shown in Fig. 1, the base station 10 transmits a control signal or data in DL (Downlink) to the terminal 20 and receives a control signal or data in UL (Uplink) from the terminal 20. Note that, here, what is transmitted via a control channel such as PUCCH and PDCCH is called a control signal, and what is transmitted via a shared channel such as PUSCH and PDSCH is called data. These names are mere examples. In addition, UCI (Uplink Control Information) is transmitted by using PUCCH or PUSCH.

The terminal 20 may be a communication apparatus that includes a wireless communication function, such as a smart-phone, a mobile phone, a tablet, a wearable terminal, a communication module for M2M (Machine-to-Machine), or the like. As shown in Fig. 1, the terminal 20 uses various communication services provided by the wireless communication system by receiving control signals or data in DL from the base station 10 and transmitting control signals or data in UL to the base station 10. It is to be noted that the terminal 20 may be referred to as a UE, and the base station 10 may be referred to as a gNB. In addition, the terminal 20 and the base station 10 have a carrier phase positioning function.

The terminal 20 can perform carrier aggregation to communicate with the base station 10 by bundling a plurality of cells (a plurality of CCs (component carriers)). One PCell (primary cell) and one or more SCells (secondary cells) are used in the carrier aggregation. In addition, PUCCH-SCell having PUCCH may be used.

The LMF (Location Management Function) 30 is a function (device) for performing a communication control related to location information services specified for 5GC. The LMF 30 may be referred to as a location management server, a location management device, or a management device. For example, the LMF 30 can receive results of measurement (phase, reception power, time difference, angle, or the like) of a reference signal from the terminal 20 or the base station 10, and can calculate the location of the terminal 20. In addition, the LMF 30 can provide the terminal 20 and the base station 10 with configuration information or control information related to positioning.

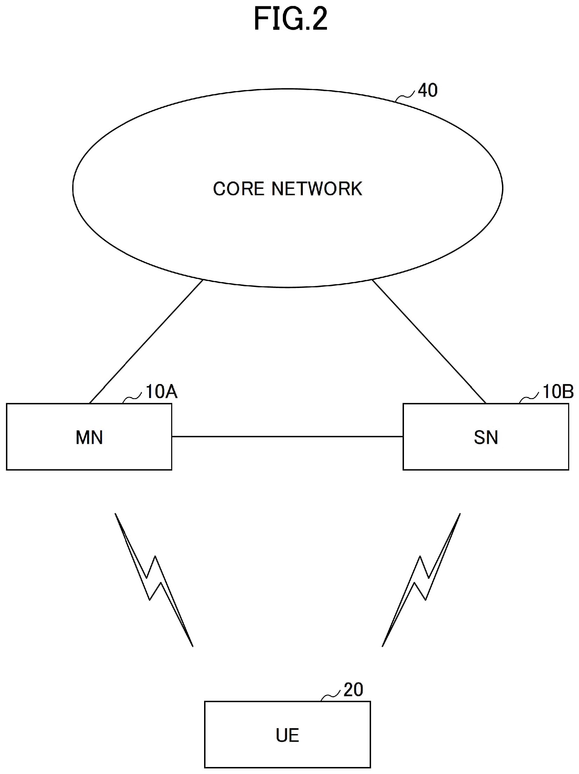

Fig. 2 shows an example of a configuration of a wireless communication system in a case where DC (Dual connectivity) is performed. As shown in Fig. 2, there are a base station 10A that is a master node (MN) and a base station 10B that is a secondary node (SN) in the wireless communication system. The base station 10A and the base station 10B are each connected to a core network 40. The terminal 20 is enabled to communicate with both the base station 10A and the base station 10B.

A cell group provided by the base station 10A that is an MN is called an MCG (Master Cell Group), and a cell group provided by the base station 10B that is an SN is called an SCG (Secondary Cell Group). In addition, in DC, the MCG includes one PCell and one or more SCells, and the SCG includes one PSCell (Primary SCell) and one or more SCells.

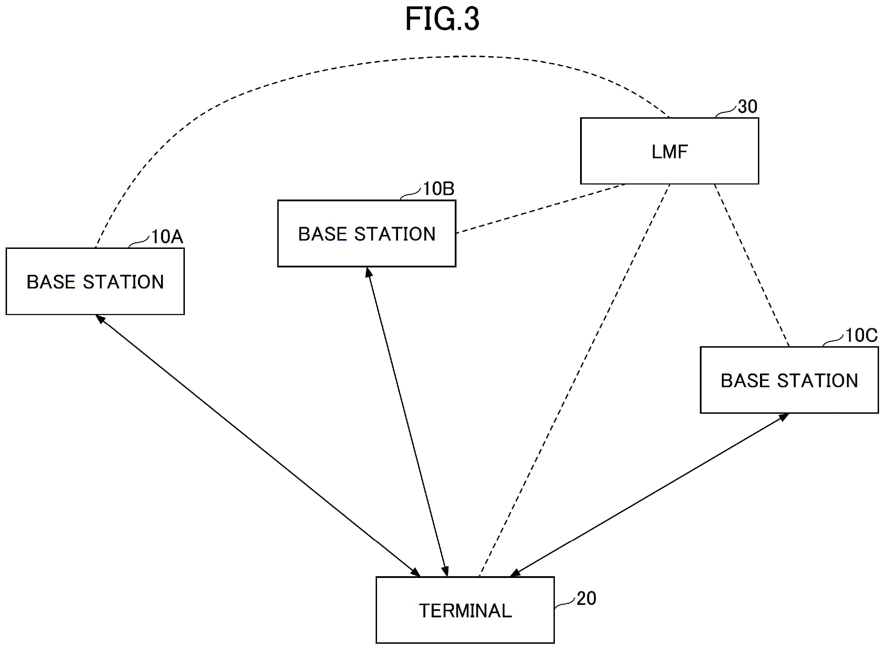

Processing operations in an embodiment the present invention may be performed by a system configuration illustrated in Fig. 1, may be performed by a system configuration illustrated in Fig. 2, or may be performed by other system configurations. Fig. 3 illustrates an example of a case in which the terminal 20 performs positioning by receiving reference signals from a plurality of base stations 10A to 10C. For example, the location of the terminal 20 can be calculated by calculating the distances (or angles) between the terminal 20 and the plurality of base stations.

The distances between the terminal 20 and the base stations can be calculated by using the signal arrival time, or a number of waves of a signal carrier (the number of waves * wavelength). In an embodiment of the present invention, as described below, the number of waves of a carrier is used.

### (Carrier phase positioning (CPP))

In an embodiment of the present invention, the reference signal used for positioning is a positioning reference signal (PRS). In an embodiment of the present invention, the terminal 20 or the base station 10 performs CPP. The CPP is a high-accuracy positioning method in which the carrier phase that is adopted for GNSS is used. It is to be noted that the terminal 20 or the base station 10 "performs CPP" may mean to perform phase measurement of a received signal or may mean to perform location calculation (distance calculation) in addition to the phase measurement.

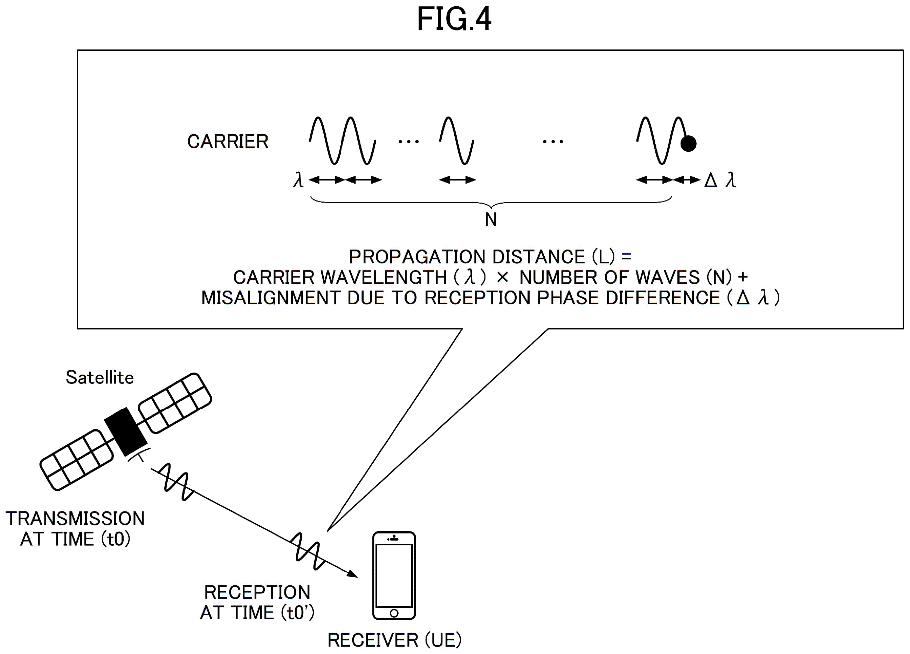

Fig. 4 illustrates an overview of CPP. Fig. 4 illustrates an example of a case in which the base station 10 is a satellite. As illustrated in Fig. 4, in CPP, the location of the positioning point is obtained by calculating the distance between the base station 10 and the positioning point by using the number of carriers and the reception phase difference between carriers (phase of a part less than one wave). Specifically, the propagation distance L can be described as "the propagation distance (L) = carrier wavelength (λ) * the number of waves (N) + misalignment due to reception phase difference (Δλ)". In addition, the phase at t0' is calculated by using the transmission time (t0) and the reception time (t0'). More specifically, in addition to calculation of the pseudo distance from the propagation time, more accurate distance calculation is performed by using the number of carriers and the phase.

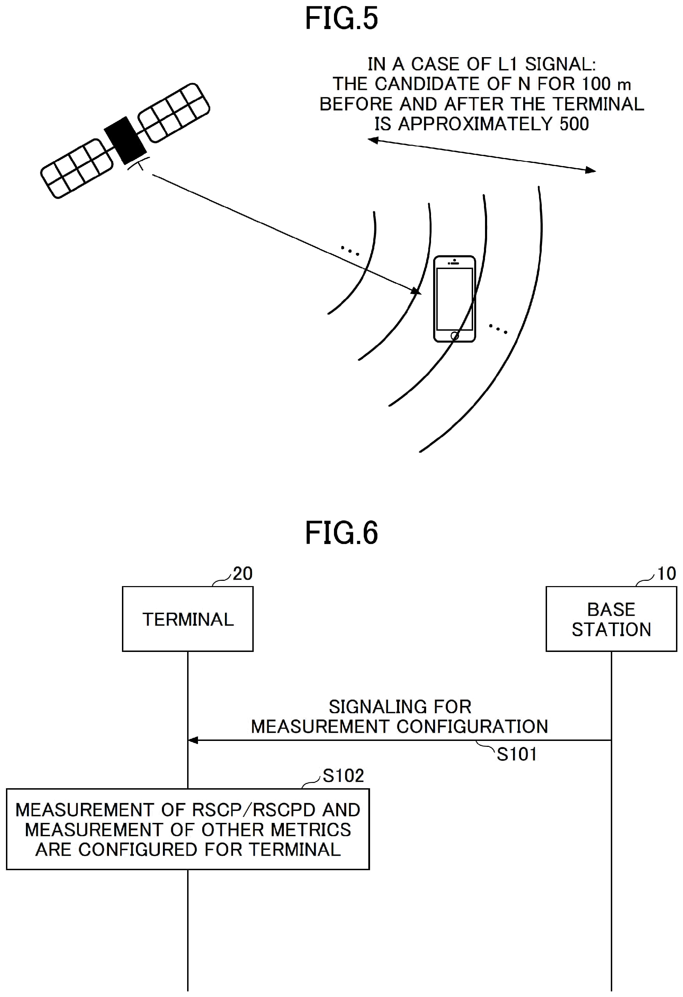

Although the phase corresponding to Δλ can be obtained by measuring the reference signal, the number of waves (N) cannot be determined by a single measurement. As illustrated in Fig. 5, in a case of using an L1 signal, there are about 500 N (number of waves) candidates in a width of 100 m.

In CPP, the process of determining the number of waves (N) is referred to as ambiguity resolution (AR). Here, in GNSS, in general, AR is performed after calculating the initial value for the number of waves (i.e., narrowing down location candidates to some extent by using the propagation time) by utilizing a plurality of satellites.

Although there are several proposed methods for determining the number of waves (N), the typical methods are described in the following (1) and (2).
(1) A method of using a plurality of carriers with different frequencies The candidate points can be significantly reduced by utilizing the phases of carriers with different wavelengths (frequencies). For example, an L1 signal (1,575.42 MHz) and an L2 signal (1,227.60 MHz) are used as the carriers with different wavelengths.
(2) A method of using satellite movement
   The coordinates of GPS satellites change constantly, and thus, the number of waves (N) is narrowed down by receiving signals by a receiver a plurality of times.

In 3GPP RAN WG1, as one of the methods for CPP ambiguity resolution, there is agreement to use a method of reusing the results of the conventional positioning measurement (positioning measurement results) such as RSTD and the UE Rx-Tx time difference.

An example of a CPP flow of this method is described below. It is to be noted that "terminal 20/base station 10" means that the subject of performing CPP may be the terminal 20 or may be the base station 10. It is to be noted that "/" means "or" in this specification unless otherwise indicated.

In step 1, the terminal 20/base station 10 that performs CPP performs integer ambiguity resolution and determines an approximate number of waves (N) and propagation distance based on the conventional positioning measurement results.

In step 2, the terminal 20/base station 10 determines the number of waves (N) by using the received phase value and calculates the propagation distance with granularity less than the carrier. It is to be noted that the terminal 20/base station 10 may indicate the measured received phase value to the LMF 30, and the LMF 30 may calculate the propagation distance with granularity less than the carrier.

However, a method in which the CPP measurement and the metric measurement in a positioning method other than CPP (for example, the conventional positioning method) are implemented has not been clarified in the CPP ambiguity resolution.

According to an embodiment of the present invention, a method in which the CPP measurement and the metric measurement in a positioning method other than CPP (for example, the conventional positioning method) are enabled to be implemented for CPP ambiguity resolution can be clarified and the accuracy of the CPP ambiguity resolution can be improved.

Hereinafter, the first to the fourth embodiments will be described. In each embodiment, the assumed subject is the terminal 20, but the assumed subject may be the base station 10. Each of the first to the fourth embodiments may be performed or a plurality of embodiments among the first to the fourth embodiments may be combined to be performed.

### (First embodiment)

According to the first embodiment, measurement of a plurality of metrics used for positioning measurement may be configured for the terminal 20. The plurality of metrics may include, for example, metrics used for CPP measurement and other metrics used for positioning measurement other than the metrics used for CPP measurement.

The metrics used for CPP measurement are, for example, Reference Signal Carrier Phase (RSCP)/RSCP Difference (RSCPD).

The other metrics are, for example, metrics used for the conventional positioning measurement such as RSTD and UE Rx-Tx time difference.

For example, in a case where a plurality of metrics are configured for the terminal 20, the terminal 20 expects that the same CPP calculation operation is to be performed by using the plurality of metrics.

For example, in a case where a plurality of metrics are configured for the terminal 20, measurement results of other metrics may be used for the CPP integer ambiguity resolution.

Fig. 6 is a sequence diagram illustrating an example of an operation procedure in the first embodiment. An operation of the base station 10 illustrated in Fig. 6 may be performed by the LMF 30.

As illustrated in Fig. 6, in step S101, the base station 10 transmits signaling for measurement configuration to the terminal 10. The signaling for measurement configuration is, for example, signaling for the terminal 20 to configure the measurement of RSCP/RSCPD and the measurement of other metrics. The signaling for measurement configuration is, for example, RRC/MAC-CE/DCI/LPP signaling.

In step S102, the measurement of RSCP/RSCPD and the measurement of other metrics are simultaneously configured for the terminal 20. In a case where the measurement of RSCP/RSCPD and the measurement of other metrics are simultaneously configured for the terminal 20, the terminal 20 may expect that measurement results of RSCP/RSCPD and measurement results of other metrics are to be used for the CPP integer ambiguity resolution.

Although an example of an operation for the downlink CPP (DL CPP) is illustrated in the above-described first embodiment, the first embodiment may be applied to the uplink CPP (UL CPP). For example, in a case where SRS for positioning is configured for the terminal 20, the terminal 20 may expect that the measurement of RSCP/RSCPD and the measurement of other metrics are to be performed by the base station 10. The other metrics for UL CPP are, for example, metrics such as relative time of arrival (RTOA) and gNB Rx-Tx time difference.

In the above-described first embodiment, an example is illustrated in which the measurement of RSCP/RSCPD and the measurement of other metrics are simultaneously configured for the terminal 20 or the base station 10. However, the measurement of RSCP/RSCPD and the measurement of other metrics may be configured for the terminal 20 or the base station 10 at different timings.

In step S101 of Fig. 6, an example is illustrated in which the same signaling is used for configuring the measurement of RSCP/RSCPD and the measurement of other metrics. However, the signaling for configuring the measurement of RSCP/RSCPD may be different from the signaling for configuring the measurement of other metrics.

According to the first embodiment, the measurement of RSCP/RSCPD for CPP and the measurement of other metrics for a positioning method other than CPP can be performed for the CPP ambiguity resolution. According to the above-described operation, the accuracy of the CPP ambiguity resolution can be improved by using measurement results of other metrics.

### (Second embodiment)

According to the second embodiment, in a case where the measurement of RSCP/RSCPD and the measurement of other metrics are configured for the terminal 20, the terminal 20 may expect that the DL-PRS of the measurement target for the measurement of RSCP/RSCPD and the DL-PRS of the measurement target for the measurement of other metrics are to be the same DL-PRS resource (set). The DL-PRS resource (set) means the DL-PRS resource or the DL-PRS resource set.

For example, in a case where a unique DL-PRS resource (set) ID of the measurement target for the measurement of RSCP/RSCPD and for the measurement of other metrics is configured for the terminal 20, the terminal 20 may expect that the same CPP calculation is to be performed by using the results of the measurement of RSCP/RSCPD and by using the results of the measurement of other metrics.

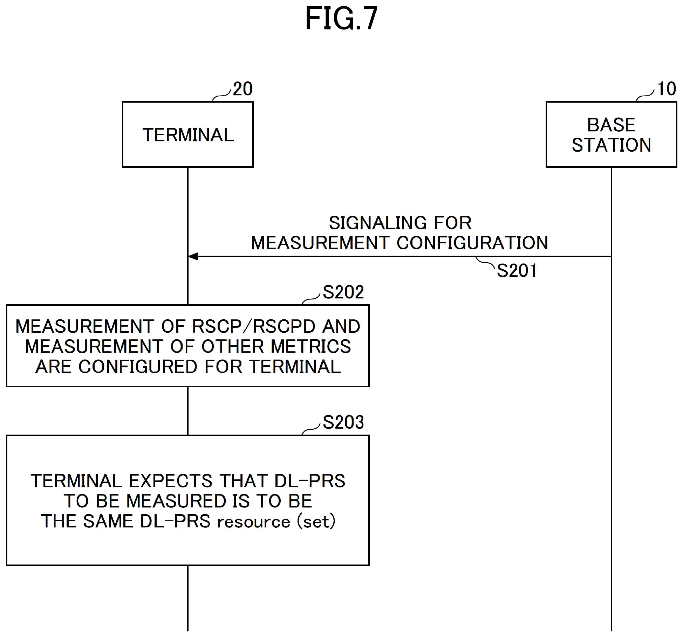

Fig. 7 is a sequence diagram illustrating an example of an operation procedure in the second embodiment. An operation of the base station 10 illustrated in Fig. 7 may be performed by the LMF 30.

An operation in step S201 and an operation in step S202 illustrated in Fig. 7 are the same as an operation in step S101 and an operation in step S102 illustrated in Fig. 6, respectively.

The terminal 20 for which the measurement of RSCP/RSCPD and the measurement of other metrics are configured in step S202 illustrated in Fig. 7 may expect that the DL-PRS of the measurement target for the measurement of RSCP/RSCPD and the DL-PRS of the measurement target for the measurement of other metrics are to be the same DL-PRS resource (set) in step S203. The terminal 20 may perform the same CPP calculation by using the results of the measurement of RSCP/RSCPD and by using the results of the measurement of other metrics, based on this expectation.

The terminal 20 for which the measurement of RSCP/RSCPD and the measurement of other metrics are configured in step S202 illustrated in Fig. 7 may expect that the DL-PRS of the measurement target for the measurement of RSCP/RSCPD and the DL-PRS of the measurement target for the measurement of other metrics are to be the same DL-PRS resource (set) in step S203. The terminal 20 may perform the same CPP calculation by using the results of the measurement of RSCP/RSCPD and by using the results of the measurement of other metrics, based on this expectation.

According to another example of the second embodiment, in a case where the measurement of RSCP/RSCPD and the measurement of other metrics are configured for the terminal 20, the terminal 20 may expect that the DL-PRS resource (set) of the DL-PRS of the measurement target for the measurement of RSCP/RSCPD is to be different from the DL-PRS resource (set) of the DL-PRS of the measurement target for the measurement of other metrics.

For example, in a case where different DL-PRS resource (set) IDs are configured for the terminal 20 as the measurement target for the measurement of RSCP/RSCPD and the measurement target for the measurement of other metrics, the terminal 20 may expect that the CPP calculation using the results of the measurement of RSCP/RSCPD and another positioning calculation that is different from the CPP calculation using the results of the measurement of other metrics are to be performed.

Although an example of an operation for DL CPP is illustrated in the above-described second embodiment, the second embodiment may be applied for UL CPP. For example, in a case where SRS for positioning is configured for the terminal 20, the terminal 20 may expect that SRS for positioning of the measurement target for the measurement of RSCP/RSCPD and SRS for positioning of the measurement target for the measurement of other metrics are to be the same SRS for positioning resource (set) for the base station 10. The other metrics for UL CPP are, for example, metrics such as RTOA and gNB Rx-Tx time difference.

According to the second embodiment, a PRS resource condition for performing measurement of RSCP/RSCPD for CPP and measurement of other metrics for CPP ambiguity resolution can be defined by causing the measurement target for measurement of RSCP/RSCPD for CPP to be the same DL-PRS resource as the measurement target for measurement of other metrics. According to the above-described operation, the propagation path for measurement is converged, and the accuracy of ambiguity resolution can be improved.

### (Third embodiment)

According to the third embodiment, in a case where the measurement of RSCP/RSCPD and the measurement of other metrics are configured for the terminal 20, the terminal 20 may expect that the DL-PRS resource (set) of the DL-PRS of the measurement target for the measurement of RSCP/RSCPD and the DL-PRS resource (set) of the DL-PRS of the measurement target for the measurement of other metrics are to satisfy a predetermined condition.

In the third embodiment, in a case where the predetermined condition is satisfied, the terminal 20 may expect that the DL-PRS resource (set) of the DL-PRS of the measurement target for the measurement of RSCP/RSCPD and the DL-PRS resource (set) of the DL-PRS of the measurement target for the measurement of other metrics are to be the same. The terminal 20 may perform the same CPP calculation by using the results of the measurement of RSCP/RSCPD and by using the results of the measurement of other metrics, based on this expectation.

For example, the terminal 20 may expect that the predetermined condition is to be uniquely specified by the technical specification.

For example, the terminal 20 may expect that the predetermined condition is to be configured/updated/indicated/signaled by the network (base station 10) via RRC/MAC-CE/DCI/LPP.

For example, the predetermined condition will be described below.

The predetermined condition is a condition that QCLs of the DL-PRS resources (sets) are the same.

The predetermined condition is a condition that the reception timing gap between the DL-PRS resources (sets) is equal to or less than (or is less than) a certain value.

The predetermined condition is a condition that the measurement gaps in the DL-PRS resources (sets) are the same.

The predetermined condition is a condition that the DL-PRS resources (sets) belong to the same PPW (PRS processing Window).

The predetermined condition may be a combination of the above-described conditions.

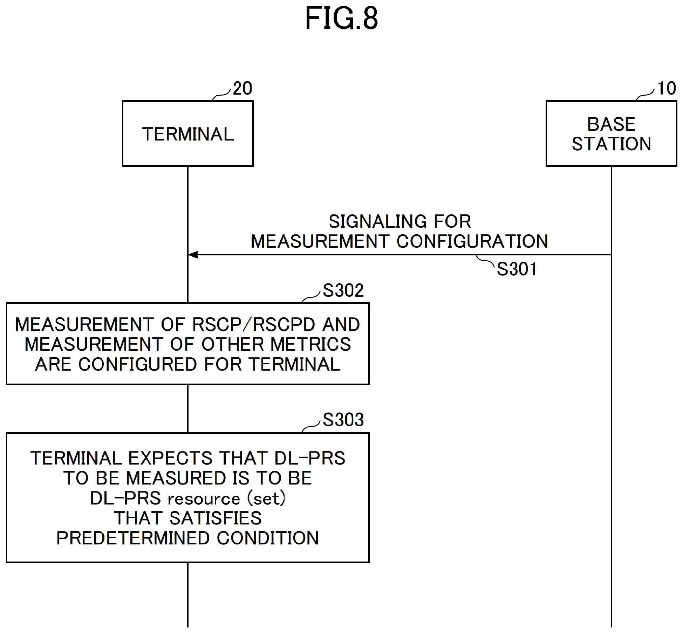

Fig. 8 is a sequence diagram illustrating an example of an operation procedure in the third embodiment. An operation of the base station 10 illustrated in Fig. 8 may be performed by the LMF 30.

An operation in step S301 and an operation in step S302 illustrated in Fig. 8 are the same as an operation in step S101 and an operation in step S102 illustrated in Fig. 6, respectively.

The terminal 20 for which the measurement of RSCP/RSCPD and the measurement of other metrics are configured in step S302 illustrated in Fig. 8 may expect that the DL-PRS resource (set) of the DL-PRS of the measurement target for the measurement of RSCP/RSCPD and the DL-PRS resource (set) of the DL-PRS of the measurement target for the measurement of other metrics are to satisfy a predetermined condition in step S303.

Although an example of an operation for DL CPP is illustrated in the above-described third embodiment, the third embodiment may be applied for UL CPP. For example, in a case where SRS for positioning is configured for the terminal 20, the terminal 20 may expect that the SRS for positioning resource (set) of the SRS for positioning of the measurement target for the measurement of RSCP/RSCPD and the SRS for positioning resource (set) of the SRS for positioning of the measurement target for the measurement of other metrics are to satisfy a predetermined condition for the base station 10. The other metrics for UL CPP are, for example, metrics such as RTOA and gNB Rx-Tx time difference.

According to the third embodiment, the propagation path for measurement can be converged and the accuracy of ambiguity resolution can be improved by defining the PRS resource condition for performing measurement of RSCP/RSCPD for CPP and measurement of other metrics for a positioning method other than CPP for CPP ambiguity resolution.

### (Fourth embodiment)

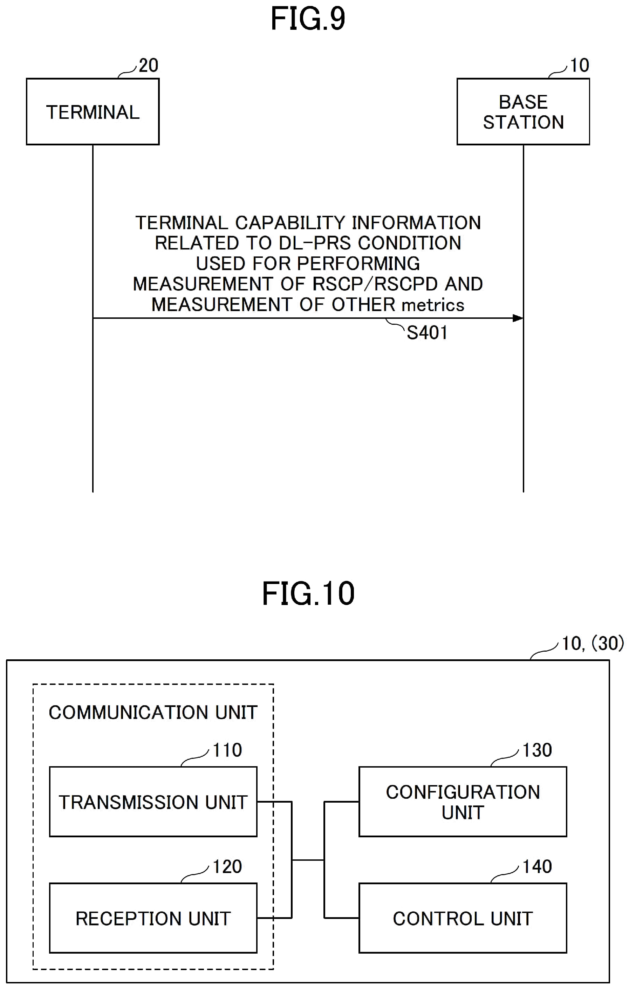

According to the fourth embodiment, as illustrated in Fig. 9, the terminal 20 transmits terminal capability information (UE capability) related to a condition for DL-PRS for performing measurement of RSCP/RSCPD and measurement of other metrics to the network (base station 10) (step S401).

The terminal capability information includes one of or some of the following (1) to (4).
(1) Information indicating that the terminal 20 can perform (can support) or cannot perform (cannot support) measurement of RSCP/RSCPD and measurement of other metrics by using the same DL-PRS resource
(2) Information indicating other metrics that can be measured by using the same DL-PRS resource as that for measurement of RSCP/RSCPD (RSTD/UE Rx-Tx time difference/Angle of Departure)
(3) Information indicating other metrics that can be measured by using the same SRS for positioning resource as that for measurement of RSCP/RSCPD (RTOA/gNB Rx-Tx time difference/Angle of Arrival)
(4) Condition for DL-PRS in which measurement of RSCP/RSCPD and measurement of other metrics can be performed (for example, an allowable value X [ms/symbol/slot] for the reception timing gap between the DL-PRS resources (sets))

The information described in the above-described (3) may be transmitted to the LMF 30 as information indicating the capability of the base station 10, for example.

According to the fourth embodiment, the base station 10/LMF 30 can determine the capability of the terminal 20 related to CPP. The LMF 30 can determine the capability of the base station 10 related to CPP. As a result, CPP ambiguity resolution can be performed in accordance with the capability of the terminal 20/base station 10.

### (Other examples)

Hereinafter, examples that can be applied to any one of the embodiments from the first embodiment to the fourth embodiment will be described.

The "signaling (signaled)" may be replaced with "configured by RRC", "activated/deactivated/updated by MAC-CE", "indicated by DCI", "configured by LPP", "requested by NRPPa", or the like.

Other metrics may be replaced with "E-CID", "DL-TDOA", UL-TDOA", "Multi-RTT", "DL-AoD", "UL-AoA", etc.

"SRS for positioning" may be replaced with "SRS-pos", "UL-PRS", or the like.

"Carrier Phase Positioning (CPP)" may be replaced with "Carrier Phase Measurement (CPM)", "Phase-based positioning", etc.

In addition, "ambiguity resolution" may be replaced with "integer ambiguity resolution", "wave-number detection", etc.

### (Device configuration)

Next, a functional configuration example of the base station 10 and the terminal 20 for performing the processes and operations described above will be described. The base station 10 and the terminal 20 include functions for implementing all of the above-described embodiments. It is to be noted that each of the base station 10 and the terminal 20 may include only a function for implementing one of the embodiments.

### <Base station>

Fig. 10 is a drawing illustrating an example of a functional configuration of the base station 10. As shown in Fig. 10, the base station 10 includes a transmission unit 110, a reception unit 120, a configuration unit 130, and a control unit 140. The functional configuration illustrated in Fig. 10 is merely an example. Functional divisions and names of functional units may be any division and name as long as operations related to an embodiment of the present invention can be performed. Further, the transmission unit 110 and the reception unit 120 may be combined and may be referred to as a communication unit.

The transmission unit 110 includes a function for generating a signal to be transmitted to the terminal 20 side and transmitting the signal wirelessly. The transmission unit 110 can also transmit a signal to the network device such as an LMF 30. The reception unit 120 includes a function for receiving various signals transmitted from the terminal 20 and acquiring, for example, information of a higher layer from the received signals. The reception unit 120 can also receive a signal from the network device such as an LMF 30. Further, the transmission unit 110 has a function to transmit NR-PSS, NR-SSS, NR-PBCH, DL/UL control signals, DCI via PDCCH, data via PDSCH, and the like, to the terminal 20.

The configuration unit 130 stores preset configuration information and various configuration information items to be transmitted to the terminal 20 in a storage device included in the setting unit 130 and reads the preset configuration information from the storage apparatus if necessary.

The control unit 140 performs scheduling of the terminal 20 for DL reception or UL transmission, via the transmission unit 110. The functional units related to signal transmission in the control unit 140 may be included in the transmission unit 110, and the functional units related to signal reception in the control unit 140 may be included in the reception unit 120.

In addition, the LMF 30 may have a configuration illustrated in Fig. 10. In a case where the configuration illustrated in Fig. 10 is for an LMF, the transmission unit 110 transmits a signal to another network device (including the base station) and the reception unit 120 receives a signal from another network device (including the base station).

### <Terminal 20>

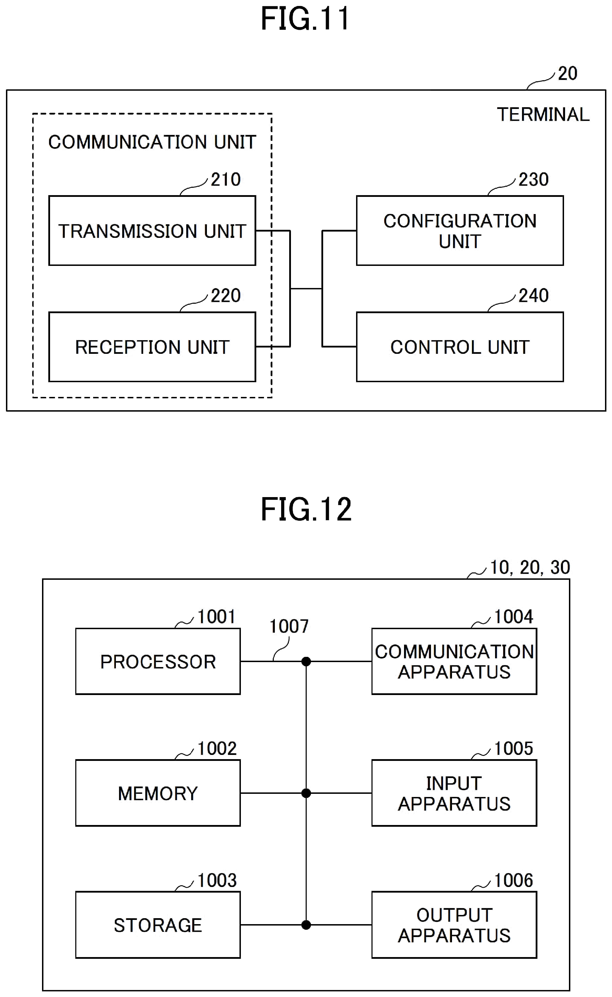

Fig. 11 is a diagram illustrating an example of a functional configuration of the terminal 20. As shown in Fig. 11, the terminal 20 includes a transmission unit 210, a reception unit 220, a configuration unit 230, and a control unit 240. The functional configuration illustrated in Fig. 11 is merely an example. Functional divisions and names of functional units may be any division and name as long as operations related to an embodiment of the present invention can be performed. The transmission unit 210 and the reception unit 220 may be combined and may be referred to as a communication unit.

The transmission unit 210 generates a transmission signal from transmission data and transmits the transmission signal wirelessly. The reception unit 220 receives various signals wirelessly and obtains higher layer signals from the received physical layer signals. In addition, the reception unit 220 has a function of receiving NR-PSS, NR-SSS, NR-PBCH, DL/UL/SL control signals, DCI via PDCCH, data via PDSCH, etc., transmitted from the base station 10. In addition, for example, with respect to the D2D communications, the transmission unit 210 may transmit, to another terminal 20, PSCCH (Physical Sidelink Control Channel), PSSCH (Physical Sidelink Shared Channel), PSDCH (Physical Sidelink Discovery Channel), PSBCH (Physical Sidelink Broadcast Channel), etc., and the reception unit 220 may receive, from the another terminal 20, PSCCH, PSSCH, PSDCH, or PSBCH.

The configuration unit 230 stores various configuration information items received from the base station 10 or the another terminal by the reception unit 220 in the storage device included in the configuration unit 230, and reads them from the storage device as necessary. In addition, the configuration unit 230 also stores pre-configured configuration information.

The control unit 240 controls the terminal 20. The functional units related to signal transmission in the control unit 240 may be included in the transmission unit 210, and the functional units related to signal reception in the control unit 240 may be included in the reception unit 220. Further, the transmission unit 210 may be referred to as a transmitter, and the reception unit 220 may be referred to as a receiver. It is to be noted that the phase measurement may be performed by the reception unit 220, or may be performed by the control unit 240.

In the present specification, at least what is described in the following clause is disclosed.

### <Clause>

### (Clause 1)

A terminal including:
a reception unit configured to receive configuration information related to measurement of metrics for positioning from a network; and
a control unit configured to configure measurement of a first metric used for carrier phase positioning and measurement of a second metric used for a positioning method that is different from the carrier phase positioning, for the terminal based on the configuration information.

### (Clause 2)

The terminal as described in clause 1, wherein
a measurement target of the first metric measurement and a measurement target of the second metric measurement are a same resource of a positioning reference signal.

### (Clause 3)

The terminal as described in clause 2, wherein
the control unit calculates the carrier phase positioning based on a result of the first metric measurement and a result of the second metric measurement.

### (Clause 4)

The terminal as described in clause 1, wherein
in a case where a resource of a positioning reference signal that is a measurement target of the first metric measurement and a resource of a positioning reference signal that is a measurement target of the second metric measurement satisfy a predetermined condition, the control unit expects that the resource of a positioning reference signal that is a measurement target of the first metric measurement and the resource of a positioning reference signal that is a measurement target of the second metric measurement are to be a same resource.

### (Clause 5)

The terminal as described in clause 1, further including:
a transmission unit configured to transmit capability information including a condition related to a positioning reference signal for performing the first metric measurement and the second metric measurement to the network.

### (Clause 6)

A communication method performed by a terminal, the communication method including:
receiving configuration information related to measurement of metrics for positioning from a network; and
configuring measurement of a first metric used for carrier phase positioning and measurement of a second metric used for a positioning method that is different from the carrier phase positioning, for the terminal based on the configuration information.

According to any one of the above-described configurations, measurement of CPP metric (RSCP/RSCPD) for CPP ambiguity resolution and measurement of other metrics for a positioning method other than CPP can be performed. According to the above-described operation, the accuracy of the CPP ambiguity resolution can be improved by using measurement results of other metrics. According to clauses 2 to 4, the propagation path for measurement can be converged and the accuracy of ambiguity resolution can be improved by defining the PRS resource condition for performing measurement of RSCP/RSCPD and measurement of other metrics by causing the measurement target for measurement of RSCP/RSCPD for CPP for CPP ambiguity resolution to be the same DL-PRS resource as that for measurement of other metrics for a positioning method other than CPP.

### (Hardware structure)

The block diagrams that have been used to describe the above embodiments (Fig. 10 and Fig. 11) show blocks in functional units. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

For example, the base station 10, the terminal 20, etc., according to an embodiment of the present disclosure may function as a computer for processing the radio communication method of the present disclosure. Fig. 12 is a drawing illustrating an example of a hardware structure of the base station 10, the terminal 20, and the LMF 30 according to an embodiment of the present disclosure. Physically, the above-described base station 10 and terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10, the terminal 20, and the LMF 30 may be configured to include one or more of apparatuses shown in the drawings, or may be configured not to include part of apparatuses.

Each function of the base station 10 and the terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading or writing of data in the memory 1002 and the storage 1003.

The processor 1001 controls the whole computer by, for example, running an operating system. The processor 1001 may include a central processing unit (CPU) including an interface with a peripheral apparatus, a control apparatus, a calculation apparatus, a register, etc. For example, the above-described control unit 140, control unit 240, and so on may be implemented by the processor 1001.

Furthermore, the processor 1001 reads programs (program codes), software modules, data, or the like, from at least one of the storage 1003 or the communication apparatus 1004, into the memory 1002, and executes various processes according to these. As for the programs, programs to allow computers to execute at least part of the operations of the above-described embodiments are used. For example, the control unit 140 of the base station 10 may be implemented by control programs that are stored in the storage device 1002 and are executed by the processor 1001. Further, for example, the control unit 240 of the terminal 20 may be implemented by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, or other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired or wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) or time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input apparatus 1005 is an input device that receives input from the outside (for example, a keyboard, a mouse, a microphone, a switch, a button, a sensor, and so on). The output apparatus 1006 is an output device that outputs something to the outside (e.g., display, speaker, LED lamp). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10, the terminals 20, and the LMF 30 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

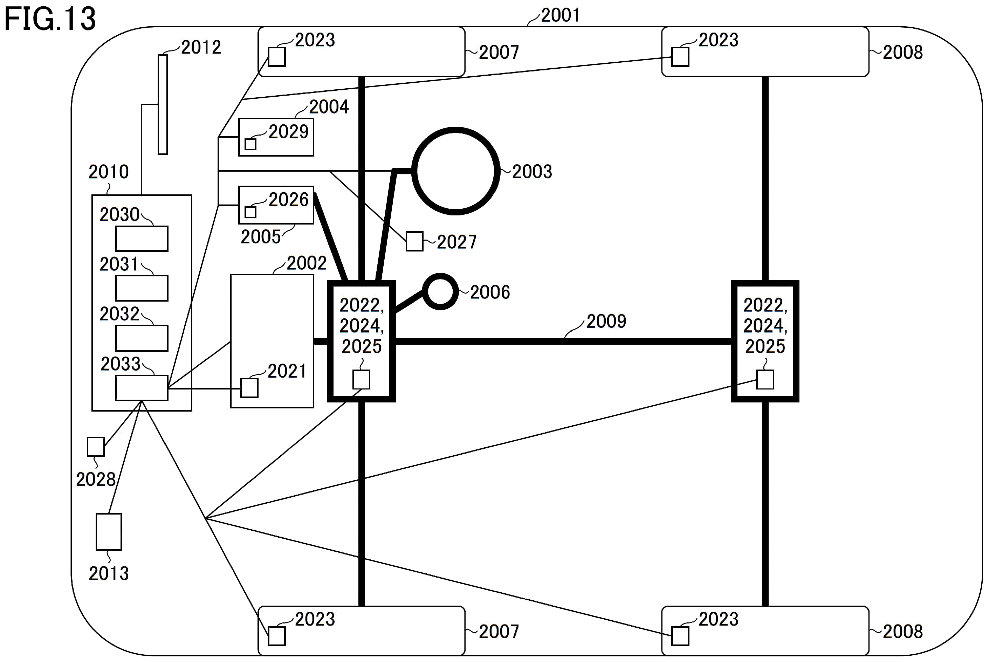

Also, the terminal 20, the base station 10, or the LMF 30 may be included in the vehicle 2001. Fig. 13 shows an example of a configuration of a vehicle 2001. As shown in Fig. 13, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The terminal 20, the base station 10, or the LMF 30 related to the aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheels or the rear wheels, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from a drive unit 2002, a steering unit 2003, an accelerator pedal 2004, a brake pedal 2005, a shift lever 2006, front wheels 2007, rear wheels 2008, an axle 2009, a microprocessor 2031 and a memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2028 described above input to the electronic control unit 2010, information obtained based on the signals, and information based on an input from the outside (a user) obtained via the information service unit 2012, to the external apparatus via radio communication. The electronic control unit 2010, the various sensors 2021 to 2028, the information service unit 2012, and the like may be referred to as input units that receive input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to devices, such as a display, a speaker, or the like, based on the PDSCH received by the communication module 2013 (or data/information decoded from the PDSCH)). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Supplement of embodiment)

As described above, one or more embodiments have been described. The present invention is not limited to the above-described embodiments. A person skilled in the art should understand that there are various modifications, variations, alternatives, replacements, etc. of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described related to an embodiment of the present invention may be changed as long as there is no contradiction. For the sake of description convenience, the base station 10, the terminal 20, and the LMF 30 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may each be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), W-CDMA (registered trademark), GSM (registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. In addition, a plurality of systems may be combined (for example, a combination of: at least one of LTE or LTE-A; 5G, and the like) to be applied. In addition, a plurality of systems may be combined (for example, a combination of: at least one of LTE or LTE-A; 5G, and the like) to be applied.

The order of processes, sequences, flowcharts, and so on that have been used to describe the aspects/embodiments in the present specification may be re-ordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in the present disclosure may be implemented by a value (0 or 1) represented by one bit, by a Boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because various channels (e.g., PUCCH, PDCCH, or the like) and information elements may be identified by any suitable names, the various names assigned to these various channels and information elements are not used as limitations.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station supports a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, transmitting information to the terminal by the base station may be referred to as instructing the terminal to perform any control and/or operation based on the information by the base station.

In the present disclosure, terms such as "mobile station (MS)", "user terminal", "user equipment (UE)", "terminal", and the like, may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station or a mobile station may be referred to as a "transmitting apparatus," a "receiving apparatus," a "radio communication apparatus," and so on. Note that at least one of a base station or a mobile station may be a device mounted on a moving object or a moving object itself, and so on. The mobile station is an object that can move, and the moving speed can be any speed. In addition, a mobile station that is not moving is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station or a mobile station also includes an apparatus which does not necessarily move during communication operation. For example, at least one of the base station or the mobile station may be an IoT (Internet of Things) device such as a sensor.

Further, the base station in the present disclosure may be read as the terminal. For example, each aspect/embodiment of the present disclosure may be applied to a configuration in which communications between the base station and the terminal are replaced by communications between multiple terminals 20 (e.g., may be referred to as D2D (Device-to-Device), V2X (Vehicle-to-Everything), etc.). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Similarly, the terminal in the present disclosure may be read as the base station. In this case, the function of the terminal described above may be provided by the base station.

As used herein, the term "determining" may encompass a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may have a fixed time length (for example, 1 ms) that does not depend on the numerology.

Numerology may be a communication parameter applied to at least one of transmission or reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, or the like.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as PDSCH (or PUSCH) mapping type A. A PDSCH (or PUSCH) transmitted using a mini-slot may be referred to as PDSCH (or PUSCH) mapping type B.

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a transmission time interval, "TTI," a plurality of consecutive subframes may be referred to as a "TTI," or one slot or one mini-slot may be referred to as a "TTI." In other words, at least one of a subframe or a TTI may be a subframe (1 ms) in the conventional LTE, may be a period shorter than 1 ms (for example, 1 to 13 symbols), or may be a period longer than 1 ms. It is to be noted that the unit representing TTI may be referred to as a slot, a mini-slot, or the like, instead of a subframe. Further, a slot may be referred to as a unit time. The unit time may vary for each cell depending on the numerology.

Here, a TTI refers to the minimum time unit of scheduling in radio communication, for example. For example, in LTE systems, a base station performs, for each terminal 20, scheduling of allocating radio resources (such as a frequency bandwidth and transmission power that can be used by each terminal 20) in TTI units. It is to be noted that the definition of the TTI is not limited to the above-described definition.

The TTI may be a transmission time unit for channel-encoded data packets (transport blocks), code blocks, codewords, or the like, or may be a unit of processing in scheduling, link adaptation, or the like. It is to be noted that, when a TTI is provided, a time period (for example, the number of symbols) to which transport blocks, code blocks, codewords, or the like are actually mapped may be shorter than the TTI.

It is to be noted that, in a case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a normal TTI (TTI in LTE Rel. 8 to Rel. 12), a long TTI, a normal subframe, a long subframe, a slot, or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

It is to be noted that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and having a TTI length equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of the numerology, and may be 12, for example. The number of subcarriers included in an RB may be determined based on the numerology.

In addition, an RB may include one or a plurality of symbols in the time domain, and may have a length of one slot, one mini-slot, one subframe, or one TTI. One TTI, one subframe, and the like, may each be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource area including one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be identified by an RB index based on the common reference point of the carrier. PRBs may be defined by a certain BWP and may be numbered in the BWP.

A BWP may include a BWP for UL (UL BWP) and a BWP for DL (DL BWP). One or a plurality of BWPs may be configured in one carrier for UE.

At least one of configured BWPs may be active, and the UE is not required to expect to transmit/receive a certain signal/channel outside the active BWP. It is to be noted that that a "cell", a "carrier", or the like, in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
30 LMF
1001 Processor
1002 Memory
1003 Storage
1004 Communication apparatus
1005 Input apparatus
1006 Output apparatus
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

## Claims

1. A terminal comprising:
a reception unit configured to receive configuration information related to measurement of metrics for positioning from a network; and
a control unit configured to configure measurement of a first metric used for carrier phase positioning and measurement of a second metric used for a positioning method that is different from the carrier phase positioning, for the terminal based on the configuration information.

2. The terminal as claimed in claim 1, wherein
a measurement target of the first metric measurement and a measurement target of the second metric measurement are a same resource of a positioning reference signal.

3. The terminal as claimed in claim 2, wherein
the control unit calculates the carrier phase positioning based on a result of the first metric measurement and a result of the second metric measurement.

4. The terminal as claimed in claim 1, wherein
in a case where a resource of a positioning reference signal that is a measurement target of the first metric measurement and a resource of a positioning reference signal that is a measurement target of the second metric measurement satisfy a predetermined condition, the control unit expects that the resource of a positioning reference signal that is a measurement target of the first metric measurement and the resource of a positioning reference signal that is a measurement target of the second metric measurement are to be a same resource.

5. The terminal as claimed in claim 1, further comprising:
a transmission unit configured to transmit capability information including a condition related to a positioning reference signal for performing the first metric measurement and the second metric measurement to the network.

6. A communication method performed by a terminal, the communication method including:
receiving configuration information related to measurement of metrics for positioning from a network; and
configuring measurement of a first metric used for carrier phase positioning and measurement of a second metric used for a positioning method that is different from the carrier phase positioning, for the terminal based on the configuration information.
